# EUROPEAN PATENT APPLICATION

(11) **EP 4 787 061 A1**
(43) Date of publication of application: **05.08.2026**
(21) Application number: 23954125.3
(22) Date of filing: 25.09.2023
(51) Int. Cl.: G02C 7/04

(54) **OPHTHALMIC DEVICE**

(71) Applicant: MENICON CO., LTD., Naka-ku Nagoya-shi, Aichi 460-0006 (JP)
(72) Inventor: SUZUKI, Hiroaki, Kasugai-shi, Aichi 487-0032 (JP); SATAKE, Yurika, Kasugai-shi, Aichi 487-0032 (JP); HAYASHI, Yuki, Kasugai-shi, Aichi 487-0032 (JP)
(74) Representative: Winter, Brandl - Partnerschaft mbB
(86) International application number: PCT/JP2023/034761
(87) International publication number: WO 2025/069148

(57) **Abstract**

Provided is a novel ophthalmic device manufacturing method suitable for practical implementation of an ophthalmic device in which a heterogeneous element is embedded and arranged therein. An ophthalmic device 10 is manufactured by including a step of forming a silicone layer 40 by molding and polymerizing a silicone-containing material 32 on a positioning surface of a primary molded article 20 made of RGP or the like where a heterogeneous element 12 is positioned and supported on the positioning surface, thereby embedding the heterogeneous element 12 in the silicone layer 40.

## Description

### TECHNICAL FIELD

The present invention relates to an element-embedded ophthalmic device in which a heterogeneous element, such as a conductive material or a component, is embedded and arranged inside.

### BACKGROUND ART

In recent years, in ophthalmic devices such as contact lenses, intraocular lenses, glasses, and goggles, various functions beyond optical improvements have been considered in addition to improvement in optical properties.

For example, for contact lenses, it has been considered that heterogeneous elements are embedded and arranged, having visual functions, biosensor functions, communication functions, detection functions, and external appearance design functions inside the lens. Specifically, a kind of smart contact lens is proposed in U.S. Patent No. US 10,028,702 B2 (Patent Document 1) or the like.

However, in such element-embedded ophthalmic devices, heterogeneous elements such as conductive materials and components must be integrally assembled with high positional accuracy into the base component that constitutes the lens, etc., making them difficult to achieve practical implementation.

Under these circumstances, patent documents disclosing inventions relating to contact lenses inside which heterogeneous elements are embedded and arranged include U.S. Patent No. US 10,028,702 B2 (Patent Document 1) mentioned above, Japanese Unexamined Patent Publication No. JP-A-2019-530009 (Patent Document 2), and Japanese Patent No. JP-B-6636212 (Patent Document 3).

Patent Document 1 discloses a method of manufacturing a contact lens, including overlapping a first lens layer in a lens thickness direction with respect to a second lens layer including electronic components as heterogeneous elements embedded therein, and fixing both layers to each other using a concavo-convex fitting structure or adhesive structure.

However, in accordance with the present inventors' examination, it is difficult for the contact lens disclosed in Patent Document 1 to maintain the first lens layer and the second lens layer in a fixed state with high accuracy and stability. In particular, it is difficult to form such a concavo-convex fitting portion with high dimensional accuracy when the first lens layer and the second lens layer are fixed to each other using the concavo-convex fitting structure, and there are concerns that the adhesive may have a negative effect on optical performance when the first lens layer and the second lens layer are fixed to each other with an adhesive. Moreover, when accuracy is required for, for example, an arrangement of electronic components, it is difficult to maintain arrangement accuracy even when the first lens layer and the second lens layer are combined with each other. In addition, the overall number of precise processes is increased, making it unsuitable for mass production. Furthermore, when the first lens layer and the second lens layer are fixed to each other with an adhesive, for example, there is also a problem that it is difficult to maintain the adhesiveness in the moist environment inside the eye.

Patent Document 2 discloses a method for manufacturing a contact lens including, when machining a contact lens from a lens blank obtained by cutting out a rod of a lens material in a length direction, embedding electronic components as heterogeneous elements at a predetermined interval during a manufacturing process of the rod in the length direction so that each electronic component is arranged in each lens blank.

However, in accordance with the present inventors' examination, the contact lens disclosed in Patent Document 2 has a problem that, when electronic components are molded so as to be inserted into the rod, a negative effect is caused on polymerization molding of the rod depending on the size of electronic components, and it is difficult to ensure positioning accuracy of the electronic components within the rod. Moreover, it is difficult to accurately determine the position and orientation of electronic components within the rod, until a certain degree of machining progress is progressed on the lens blank, and there are limitations to correcting the arrangement of the electronic components within the lens during the cutting process. In particular, when contact lenses are cut and formed to fit an individual user's eye, variations in the position of electronic components in the lens blank become an even greater problem, making them unsuitable for industrial production of contact lenses.

In addition, Patent Document 3 discloses a method for molding a contact lens having a laminated two-layer structure, including molding a second layer in a state where a separate heterogeneous element is inserted into and positioned within a recessed portion formed in a molded article of a first layer, thereby molding a contact lens in which the element is embedded.

However, in accordance with the present inventors' examination, the contact lens disclosed in Patent Document 3 has a problem in that voids, which are thought to be caused by shrinkage during molding of the second layer, prone to occur near the periphery of the separate element, making it difficult to stably manufacture contact lenses of a quality that is acceptable for practical use.

As can be seen from Patent Documents 1 to 3, the conventional technology did not provide a practical solution for manufacturing ophthalmic devices incorporating embedded heterogeneous elements. Specifically, it was not feasible to accurately position such heterogeneous elements at predetermined locations while simultaneously preventing molding defects such as voids, thereby achieving stable production with high quality.

### BACKGROUND ART DOCUMENTS

### PATENT DOCUMENTS

Patent Document 1: US 10,028,702 B2
Patent Document 2: JP-A-2019-530009
Patent Document 3: JP-B-6636212

### SUMMARY OF THE INVENTION

### PROBLEM THE INVENTION ATTEMPTS TO SOLVE

The problems of the prior art illustrated above are not limited to contact lenses, and an object of the present invention is to solve at least one of the problems mentioned above that pose obstacles to the practical use of ophthalmic devices in which heterogeneous elements are embedded and arranged inside.

In particular, in accordance with the present inventors' examination, for example, it is generally difficult to control the location of voids, and therefore, under molding conditions that cause voids to form, it is unavoidable that voids will enter the optical region through which light rays incident on the cornea pass, causing voids to form and potentially adversely affecting vision when wearing the ophthalmic device. Moreover, even when voids occur in the peripheral portion outside the optical region, the presence of such voids leads to a reduction in the strength of the ophthalmic device itself, and in particular in thin electronic devices such as contact lenses equipped with electronic components, this reduction in strength can easily become a critical defect in the article. Moreover, the inventors have recognized a new problem in that oxygen-permeability materials adopted in contact lenses etc. are themselves easily permeable to water molecules, and water molecules that penetrate into the material may form water droplets in the voids, potentially adversely affecting embedded and arranged electronic components.

### MEANS FOR SOLVING THE PROBLEM

The following describes preferred embodiments for understanding the present invention. However, each preferred embodiment described below is provided as a mere example and may be adopted in combination with each other as appropriate. Moreover, the multiple components described in each preferred embodiment may be recognized and adopted as independently as possible, and may also be adopted in combination with any component described in another preferred embodiment as appropriate. Accordingly, the present invention is not limited to the following preferred embodiments, realizing various other preferred embodiments.

A preferred embodiment 1 of the present invention is as follows.

A method of manufacturing an ophthalmic device including at least one heterogeneous element embedded and arranged in the ophthalmic device, the method comprising:
molding and polymerizing a primary molded article using a first molding material, the primary molded article having a positioning surface for positioning the heterogeneous element; and
obtaining a composite molded article including the heterogeneous element embedded in a silicone layer by forming the silicone layer by molding and polymerizing a silicone-containing material on the positioning surface of the primary molded article on which the heterogeneous element is positioned.

According to the present preferred embodiment, while the heterogeneous element is positioned and supported with respect to the primary molded article, the silicone layer is formed on the positioning surface of the aforementioned primary molded article, making it possible to realize the ophthalmic device in which the heterogeneous element is embedded and arranged inside. Here, the silicone-containing material that constitutes the silicone layer in which the heterogeneous element is embedded has a sufficiently small polymerization shrinkage compared to various polymer materials that can be polymerized and molded, making it possible to suppress occurrence of voids, distortion, deterioration of dimensional accuracy around the heterogeneous elements during molding and polymerization of the silicone layer. As a result, it becomes possible to stably manufacture an ophthalmic device in which the heterogeneous elements are embedded therein having excellent quality while preventing molding defects.

That is, in accordance with the present inventors' examination, it has been found that when a polymerizable monomer is molded and polymerized with heterogeneous element embedded therein, molding defects such as voids are likely to occur, particularly around the heterogeneous element. Further examination revealed that voids and the like are likely to occur due to shrinkage during curing of the polymer molding material. Therefore, in present preferred embodiment, since the silicone-containing material that has small polymerization shrinkage is adopted from among polymer molding materials, it is possible to reduce the negative pressure that occurs around the embedded heterogeneous element during and after molding, thereby making it possible to obtain ophthalmic devices with favorable and stable quality, capable of suppressing the occurrence of defects such as voids. In particular, the suppression of the occurrence of voids and the like in accordance with the present preferred embodiment contributes to solving new problems caused by voids, as described in the above-mentioned section "PROBLEM THE INVENTION ATTEMPTS TO SOLVE", and has great technical significance toward the practical application of an ophthalmic device such as a smart contact lens.

Furthermore, during the manufacturing stage, when the silicone layer in which the heterogeneous element is embedded is molded and polymerized, the heterogeneous element is positioned with respect to the primary molded article, making it possible to accurately and stably set the position of the heterogeneous element within the ophthalmic device.

Moreover, since the silicone layer is adopted, it becomes easier to realize a high oxygen permeability (Dk value) as a material, making it easier to meet requirements for high oxygen permeability characteristics, such as in contact lenses.

A preferred embodiment 2 of the present invention is as follows.

The method according to the preferred embodiment 1, further comprising:
molding and polymerizing a separate molded article using a second molding material, the separate molded article being overlapped via the silicone layer on the primary molded article; and
forming the silicone layer by molding and polymerizing the silicone-containing material between opposing surfaces of the primary molded article and the separate molded article, the separate molded article being overlapped to the positioning surface of the primary molded article on which the heterogeneous element is positioned.

According to the present preferred embodiment, it is possible to cover both side surfaces of the silicone layer with the primary molded article and the separate molded article. In particular, a molding cavity for molding and polymerizing the silicone-containing material is formed between the opposing surfaces of the primary molded article and the separate molded article, making it possible to realize both side surfaces of the silicone layer to be stably in an adhered state to the primary molded article and the separate molded article. Moreover, by forming the silicone layer having low polymerization shrinkage between the primary molded article and the separate molded article which are previously formed, it is possible to suppress optical distortion or mechanical residual stress caused by polymerization shrinkage, thereby improving the quality and stabilizing the performance of ophthalmic devices.

In particular, ophthalmic devices that constitute an ophthalmic optical system are required to minimize optical distortion in the optical region. For example, with regard to contact lenses, Japanese contact lens approval standards require that hard contact lenses be free of distortion or interference fringes. Under such circumstances, it has been confirmed that, in accordance with the present preferred embodiment, it is possible to suppress the occurrence of optical distortion in the optical region of contact lenses and the like down to within a range from 0 to 20%, and preferably down to within a range from 0 to 5%. In addition, the measurement of optical distortion is specified in, for example, ISO 9340:1996, and can be realized using an optical distortion meter, a birefringence meter, or the like.

A preferred embodiment 3 of the present invention is as follows.

The method according to the preferred embodiment 1, further comprising:
forming the silicone layer by molding and polymerizing the silicone-containing material on the positioning surface of the primary molded article on which the heterogeneous element is positioned; and then
molding and polymerizing a cover layer for covering the silicone layer using a second molding material.

According to the present preferred embodiment, it is possible to cover both side surfaces of the silicone layer with the primary molded article and the cover layer. Moreover, even when a dimensional error occurs on the surface of the silicone layer, the cover layer is molded and polymerized on the surface of the silicone layer, and thereby the cover layer formed to be adhered to the surface of the silicone layer makes it possible to address the dimensional error on the surface of the silicone layer.

Moreover, according to the present preferred embodiment, it is also easy to form a cover layer in a form that covers the entire silicone layer, as described in the following preferred embodiment 4, for example. Consequently, since the silicone layer can be prevented from being exposed to the outside by the primary molded article and the cover layer, even when there are concerns about the properties of the silicone layer, such as lipid adsorption, it becomes easy to avoid problems caused by such properties of the silicone layer and improve the performance of the ophthalmic device.

A preferred embodiment 4 of the present invention is as follows.

The method according to any one of the preferred embodiments 1-3, wherein
the silicone layer is entirely covered without being exposed to an outside.

According to the present preferred embodiment, by avoiding external exposure of the silicone layer as described above, it is possible to avoid problems caused by external exposure due to the material properties of the silicone layer, such as high lipophilicity and limitations on care articles. Moreover, even when the rear side surface of the lens overlaps the cornea when the lens is worn, as in the case of contact lenses, the adsorption of the silicone material to the cornea may be eliminated, improving the wearing comfort.

A preferred embodiment 5 of the present invention is as follows.

The method according to any one of the preferred embodiments 1-4, wherein
the positioning surface of the primary molded article has a spherical shell concave shape,
the primary molded article is held in a state of the spherical shell concave shape opening vertically upward, and
the silicone-containing material is injected into the positioning surface.

According to the present preferred embodiment, the silicone-containing material can be accumulated to be molded and polymerized on the positioning surface of the primary molded article, by using well the spherical shell concave shape of the primary molded article, making it possible to easily form the silicone layer adhered to the positioning surface of the primary molded article on which the heterogeneous element is positioned. In particular, when manufacturing contact lenses as a type of the ophthalmic device, a lens front surface having a spherical shell convex shape is formed with the primary molded article, making it possible to advantageously set the positioning surface having the spherical shell concave shape which provides the molding surface of the silicone-containing material in the primary molded article.

A preferred embodiment 6 of the present invention is as follows.

The method according to any one of the preferred embodiments 1-4, wherein
the positioning surface of the primary molded article has a spherical convex shape, and the primary molded article is immersed in the stored silicone-containing material with the positioning surface facing vertically downward such that the silicone-containing material is molded and polymerized on the positioning surface of the primary molded article.

According to the present preferred embodiment, even when the heterogeneous element is positioned with respect to the positioning surface of the spherical shell convex shape included in the primary molded article, it becomes possible to form the silicone layer adhered to the positioning surface of the primary molded article. Moreover, when manufacturing contact lenses as a type of the ophthalmic device, a lens rear surface having a spherical shell concave shape is formed with the primary molded article, making it possible to advantageously set the positioning surface having the spherical shell convex shape which provides the molding surface of the silicone-containing material in the primary molded article.

A preferred embodiment 7 of the present invention is as follows.

The method according to any one of the preferred embodiments 1-6, wherein
a surface layer covering the silicone layer is subjected to finishing processing by cutting.

According to the present preferred embodiment, it is possible to lower the precision requirements during molding of the surface layer covering the silicone layer, for example, the surface formed by the primary molded article according to the preferred embodiment 1 or the preferred embodiment 2, or the cover layer according to the preferred embodiment 3, thereby facilitating manufacturing control, etc. Moreover, it also becomes easy to set individual shapes for such surface layers, making it possible to easily provide, for example, custom-made ophthalmic devices or small-lot produced ophthalmic devices each having a different surface shape.

A preferred embodiment 8 of the present invention is as follows.

The method according to any one of the preferred embodiments 1-7, wherein
at least a portion of a surface layer covering the silicone layer is a molded surface formed by a mold.

According to the present preferred embodiment, by forming the surface by molding, it is possible to eliminate the need for post-processing after the molding, thereby facilitating manufacturing and stabilizing the shape. In any of the preferred embodiment 7 and the preferred embodiment 8, it is not necessary to form all the surface layer by cutting or molding. For example, the front surface may be cut and formed, and the rear surface may be made into a molded surface, or the molded front surface may be partially cut.

A preferred embodiment 9 of the present invention is as follows.

The method according to any one of the preferred embodiments 1-8, wherein
affixation is used when the heterogeneous element is positioned with respect to the positioning surface of the primary molded article.

According to the present preferred embodiment, it becomes possible to easily position the heterogeneous element with respect to the primary molded article using affixation. Moreover, by adopting the positioning of heterogeneous elements by affixation according to the present preferred embodiment, it is possible to provide the positioning surface of the primary molded article or the cavity surface of the mold for the primary molded article used to form the positioning surface as a smooth surface shape without unevenness or steps, and to position and support heterogeneous elements in an affixed state thereon. This allows the structure and shape of the cavity surface of the mold for the primary molded article and the positioning surface of the primary molded article to be simplified compared to when the locking structure according to the preferred embodiment 12 described below is adopted, not only making it possible to simplify manufacturing and management but also more effectively suppressing the occurrence of voids and the like during polymerization molding of the silicone-containing material. Moreover, by adopting positioning by affixing the heterogeneous element to the positioning surface of the primary molded article, it becomes easy to automate the positioning process. However, in the present preferred embodiment, it is also possible to additionally adopt a positioning structure of another aspect, such as a locking structure according to the preferred embodiment 12 as described below, for example.

A preferred embodiment 10 of the present invention is as follows.

The method according to the preferred embodiment 9, wherein
the heterogeneous element is affixed to the positioning surface of the primary molded article by adhesion with a silicone-containing adhesive.

According to the present preferred embodiment, by using the silicone-containing adhesive when positioning the heterogeneous element, the interface between the adhesive layer and the silicone layer is suppressed, making it possible to reduce or avoid the influence on optical properties, etc. In addition, the present preferred embodiment is not limited to the preferred embodiment for realizing the positioning of the heterogeneous element solely by the silicone-containing adhesive, and it is also possible to employ, for example, an adhesive of a different composition in combination, or to adopt the locking structure according to the preferred embodiment 12 described below, as necessary. For example, when positioning a heterogeneous element with respect to the primary molded article, it is possible to use a silicone-containing adhesive in the optical region of an ophthalmic device where light rays are incident on the pupil, while using an adhesive that is not limited to the silicone-containing adhesive in the peripheral region outside the optical region. This makes it possible to avoid, for example, in the optical region and its peripheral region, the adverse effects on optical properties caused by the elution of adhesive components other than silicone-based adhesive into the silicone layer, while also making it possible to expand the range of adhesives to choose from in regions far from the optical region, considering factors such as case of handling, adhesive strength, and time required to reach adhesive strength. In addition, the content of the silicone component in the silicone-containing adhesive is not limited, and the adhesive may also contain other components, such as an acrylic component.

A preferred embodiment 11 of the present invention is as follows.

The method according to the preferred embodiment 10, wherein
the heterogeneous element is affixed to the positioning surface of the primary molded article by being formed on the positioning surface.

According to the present preferred embodiment, by forming the heterogeneous element by, for example, printing (including 3D printing), electroplating, etc. on the positioning surface of the primary molded article, the heterogeneous element is affixed to the positioning surface without using an adhesive, and the affixing process and the like can be simplified. Moreover, by forming the heterogeneous element on the positioning surface, it becomes possible to affix the heterogeneous element to the primary molded article in a state of close contact.

A preferred embodiment 12 of the present invention is as follows.

The method according to any one of the preferred embodiments 1-11, wherein
an engaging structure is used when positioning the heterogeneous element with respect to the positioning surface of the primary molded article.

According to the present preferred embodiment, it is possible to position the heterogeneous element on the primary molded article by utilizing the mutual shape between the positioning surface and the heterogeneous element, such as concave-convex fitting or a hook-like locking mechanism. In addition, the present preferred embodiment is not limited to preferred embodiments of positioning that utilize only such engagement structures, but it is also possible to position the heterogeneous element on the positioning surface by also employing, for example, affixation according to any one of the preferred embodiments 9 to 11 described above.

A preferred embodiment 13 of the present invention is as follows.

The method according to any one of the preferred embodiments 1-9, 11, and 12, wherein
the heterogeneous element is positioned without using an adhesive when positioning the heterogeneous element with respect to the positioning surface of the primary molded article.

According to the present preferred embodiment, there is no need to prepare or apply an adhesive, thereby simplifying the manufacturing process, and there is no problem with the adhesive components leaching out into the silicone layer or the primary molded article. In addition, positioning of the heterogeneous element without using an adhesive can be realized, for example, by welding the heterogeneous element to the primary molded article, etc., as well as by forming the heterogeneous element on the positioning surface as described in the preferred embodiment 11, or by positioning using an engagement structure as described in the preferred embodiment 12. The specific preferred embodiment is not limited, and preferred embodiments of positioning based on various conventionally known techniques can be adopted.

A preferred embodiment 14 of the present invention is as follows.

The method according to any one of the preferred embodiments 1-13, wherein
when obtaining the composite molded article, the silicone-containing material is interposed between the positioning surface of the primary molded article and the heterogeneous element, and the heterogeneous element is covered by the silicone layer.

According to the present preferred embodiment, it is possible to embed and arrange the heterogeneous element in the ophthalmic device while covering the heterogeneous element with the silicone layer over a wider surface. Accordingly, it is possible to improve the stability of the physical environment around the heterogeneous elements, and to more effectively prevent molding defects such as voids caused by polymerization shrinkage near the periphery of the heterogeneous elements by using the silicone-containing material having low polymerization shrinkage.

A preferred embodiment 15 of the present invention is as follows.

The method according to any one of the preferred embodiments 1-14, wherein
a component harder than the primary molded article is used as the heterogeneous element.

According to the present preferred embodiment, it is possible to avoid damage to the heterogeneous element, etc. due to, for example, the strength characteristics of the heterogeneous element itself, and to prevent damage to the heterogeneous element due to, for example, polymerization shrinkage, thereby improving the quality stability of the articles. Moreover, by embedding and arranging the heterogeneous element, it is possible to expect a reinforcement effect and improvement in shape stability of the ophthalmic device including the primary molded article.

A preferred embodiment 16 of the present invention is as follows.

The method according to the preferred embodiment 15, wherein
the heterogeneous element is an electrical component including a metal part.

According to the present preferred embodiment, by embedding and arranging the electrical component including the metal part in the ophthalmic device according to the present invention, such electrical components are covered with the primary molded article, the silicone layer, etc., which makes it possible to suppress oxidation, etc. in the electrical component including the metal part, thereby stabilizing performance, and effectively preventing external leakage, electrical short circuits, and the like.

A preferred embodiment 17 of the present invention is as follows.

The method according to any one of the preferred embodiments 1-16,
used for manufacturing a contact lens including a scleral lens.

According to the present preferred embodiment, practical use of the preferred embodiment in which the heterogeneous element is embedded can be achieved regarding contact lenses as the ophthalmic device, for example, visual functions, such as built-in display, making it easier to put into practical use functional contact lenses (including smart contact lenses) including visual functions such as display installation, biosensor functions such as tear component detection, communication functions such as transmission and reception of information to/from the outside, detection functions such as a motion sensor, external appearance design functions such as exterior characteristic coloring and luminescence, etc. Moreover, such functional contact lenses are made into, for example, scleral lenses, and thereby the positional stability of the contact lenses on eyes is improved, making it easier for the contact lenses to perform various functions more stably.

A preferred embodiment 18 of the present invention is as follows.

A method of manufacturing an ophthalmic device including at least one heterogeneous element embedded and arranged in the ophthalmic device, the method comprising:
molding and polymerizing a first molding material in a first molding cavity defined by a first mold to obtain a primary molded article, the primary molded article having a positioning surface for positioning the heterogeneous element;
molding and polymerizing a second molding material in a second molding cavity defined by a second mold to obtain a separate molded article; and
obtaining a composite molded article including the heterogeneous element embedded in a silicone layer by forming the silicone layer by molding and polymerizing a silicone-containing material between opposing surfaces of the primary molded article and the separate molded article, the separate molded article being overlapped to the positioning surface of the primary molded article on which the heterogeneous element is positioned.

According to the present preferred embodiment, the primary molded article and the separate molded article are manufactured using the first mold and the second mold having excellent mass productivity and shape stability, and the silicone layer having a small polymerization shrinkage rate is polymerized and molded using these primary molded article and separate molded article, thereby making it possible to efficiently polymerize and mold the ophthalmic device in which the silicone layer is provided between the opposing surfaces of the primary molded article and the separate molded article with excellent and stable interfacial adhesion. Moreover, since the heterogeneous element positioned in the previously formed primary molded article is embedded and arranged in the silicone layer, it is possible to embed and arrange the heterogeneous element with high positional accuracy while avoiding molding defects such as voids caused by polymerization shrinkage.

A preferred embodiment 19 of the present invention is as follows.

A method of manufacturing an ophthalmic device including at least one heterogeneous element embedded and arranged in the ophthalmic device, the method comprising:
molding and polymerizing a first molding material in a first molding cavity defined by a first mold to obtain a primary molded article, the primary molded article having a positioning surface for positioning the heterogeneous element;
opening the first mold and matching an intermediate mold with a positioning surface side of the primary molded article remaining in the first mold to define an intermediate molding cavity, and forming a silicone layer by molding and polymerizing a silicone-containing material in the intermediate molding cavity to obtain a composite molded article including the heterogeneous element that has been positioned with respect to the positioning surface being embedded in the silicone layer; and
demolding the intermediate mold and matching a second mold with a silicone layer side of the composite molded article remaining in the first mold to define a second molding cavity, and molding and polymerizing a second molding material in the second molding cavity to form a cover layer covering the silicone layer from an opposite side of the primary molded article.

According to the present preferred embodiment, it is possible to efficiently polymerize and mold the silicone layer and the cover layer in sequence by using well the first mold and the primary molded article molded therein. In particular, according to the present preferred embodiment, it is possible to easily manufacture the configuration in which the entire surface of the silicone layer is covered with the primary molded article and the cover layer.

A preferred embodiment 20 of the present invention is as follows.

The method according to any one of the preferred embodiments 2, 3, 18, and 19, wherein
each of the first molding material and the second molding material comprises a hard lens material.

According to the present preferred embodiment, since the primary molded article composed of a hard lens material and the separate molded article, or the cover layerare provided on each of the front surface side and the rear surface side of the silicone layer, it is possible to improve the accuracy and stability of the embedded position of the heterogeneous element, which is positioned by the hard lens material, and also to stabilize the shape and optical properties of the ophthalmic device equipped with the silicone layer. In addition, the first molding material and the second molding material may be different materials from each other or may be the same material.

A preferred embodiment 21 of the present invention is as follows.

An ophthalmic device including at least one heterogeneous element embedded and arranged in the ophthalmic device comprising:
a front side layer and a rear side layer comprising an oxygen-permeable hard lens material while being provided on opposite sides of a silicone layer in a thickness direction, the silicone layer being arranged at an intermediate portion in the thickness direction; and
the heterogeneous element positioned on at least one of the front side layer and the rear side layer, the heterogeneous element being embedded in the silicone layer.

According to the present preferred embodiment, for example, even when high oxygen permeation performance is required, such as in contact lenses, it is possible to meet the overall requirement for high oxygen permeability by laminating a highly oxygen-permeable silicone material in addition to the oxygen-permeable hard lens material on both the front and rear sides. Moreover, even in the case of a structure in which a heterogeneous element is embedded, the heterogeneous element is embedded in a silicone material with small polymerization shrinkage, making it possible to reduce defects such as voids around the heterogeneous element during molding, and possible to stably obtain favorable quality. Furthermore, when the heterogeneous element is embedded and arranged, the heterogeneous element is positioned by the front and rear side layers composed of hard lens material, making it possible to stably set the embedded position of the heterogeneous element with high precision.

It is preferable that the front side layer and rear side layer in the present preferred embodiment are arranged so as to be adhered to the silicone layer, without being subsequently subjected to a swelling treatment or the like, and when arranged adhered to the silicone layer, the front side layer and rear side layer including the silicone layer are given the desired shape at least in the silicone layer and the overlapping portion adhered to the silicone layer. This makes it possible to prevent the occurrence of distortion due to subsequent treatment such as swelling treatment, and to further advantageously realize stable optical properties and strength properties.

A preferred embodiment 22 of the present invention is as follows.

The ophthalmic device according to the preferred embodiment 21, wherein
the silicone layer is entirely covered by the front side layer and the rear side layer.

According to the present preferred embodiment, as described in the preferred embodiment 4, the silicone layer is prevented from being exposed to the outside, making it possible to avoid problems caused by the external exposure due to the material properties of the silicone layer.

A preferred embodiment 23 of the present invention is as follows.

The ophthalmic device according to the preferred embodiment 21 or 22, wherein
the heterogeneous element is in a positioned state by using affixation to the at least one of the front side layer and the rear side layer.

According to the present preferred embodiment, the positioning of the heterogeneous element can be performed with high precision using hard lens material, and by positioning by adhesion, the positioning of the heterogeneous element can be performed reliably and easily using the simple shape of the components, etc.

A preferred embodiment 24 of the present invention is as follows.

The ophthalmic device according to the preferred embodiment 23, wherein
the heterogeneous element is affixed by adhesion with a silicone-containing adhesive to the at least one of the front side layer and the rear side layer.

According to the present preferred embodiment, as described in the preferred embodiment 10, by using the silicone-containing adhesive, the interface between the adhesive layer and the silicone layer is substantially optically eliminated, making it possible to reduce or avoid the influence on the optical properties, etc. of the ophthalmic device.

A preferred embodiment 25 of the present invention is as follows.

The ophthalmic device according to any one of the preferred embodiments 21-24, wherein
in a central portion off the heterogeneous element, a thickness dimension of each of the front side layer and the rear side layer is set to half or less of a thickness dimension of the silicone layer.

According to the present preferred embodiment, by reducing the thickness dimensions of the front side layer and the rear side layer, it is possible to more actively utilize the high oxygen permeability of the silicone layer, and therefore the present preferred embodiment can be suitably applied to, for example, contact lenses, etc., which require oxygen permeability for the entire ophthalmic device. Also in the present preferred embodiment, it is also possible to, for example, not provide the silicone layer near the outer periphery of the peripheral portion outside the central portion which is the optical region of the ophthalmic device, or to make the thickness dimension of the front side layer and/or the rear side layer in the peripheral portion greater than half the thickness dimension of the silicone layer, thereby advantageously ensuring the overall shape retention performance of the ophthalmic device by using a hard lens material.

A preferred embodiment 26 of the present invention is as follows.

The ophthalmic device according to any one of the preferred embodiments 21-25, wherein
a total mass of the silicone layer, the front side layer, and the rear side layer combined is 99% or less of a total mass when the silicone layer is replaced by the same hard lens material as the front layer.

According to the present preferred embodiment, not only is the weight of the ophthalmic device itself reduced, thereby improving the wearing comfort, but the composition ratio of the silicone layer with respect to the front side and rear side layers composed of hard lens material is ensured to at least a certain extent, making it possible to more significantly have the characteristic effects, such as improved oxygen permeability, due to the provision of the silicone layer.

### EFFECT OF THE INVENTION

According to the method of the present invention, it is possible to manufacture an ophthalmic device including a heterogeneous element embedded and arranged therein while realizing high positioning accuracy of the heterogeneous element and reducing or avoiding molding defects such as voids.

As mentioned above, since ophthalmic devices including embedded and arranged heterogeneous elements are particularly prone to void formation, these voids not only adversely affect visibility, but may also reduce the overall strength of the ophthalmic device, potentially resulting in a fatal article defect. Furthermore, since ophthalmic devices including embedded and arranged heterogeneous elements have a particular issue of concern, i.e., the occurrence of water droplets in voids may have a negative impact on the heterogeneous elements, the present invention has great technical significance in that it can achieve the effect of suppressing voids, etc. in the ophthalmic devices including embedded and arranged heterogeneous elements.

Additionally, in the ophthalmic device according to the present invention, the use of the front side layer and/or the rear side layer composed of the hard lens material ensures the positioning accuracy of the heterogeneous elements, and the silicone layer enables high oxygen permeability.

### BRIEF DESCRIPTION OF THE DRAWINGS

[FIG. 1] is a process explanatory diagram illustrating a manufacturing process of a contact lens as an ophthalmic device according to a first practical embodiment of the present invention.
[FIG. 2] is a process explanatory diagram following that of FIG. 1.
[FIG. 3] is an explanatory diagram for explaining molding of a primary molded article by a first mold, in the manufacturing of the contact lens as the first practical embodiment illustrated in FIG. 1.
[FIG. 4] is an explanatory diagram illustrating a state where an embedded component as a heterogeneous element is positioned with respect to the primary molded article illustrated in FIG. 3.
[FIG. 5] is a process explanatory diagram which illustrates a manufacturing process of a contact lens as an ophthalmic device according to a second practical embodiment of the present invention.
[FIG. 6] is a process explanatory diagram following that of FIG. 5.
[FIG. 7] is an explanatory diagram for explaining molding of a primary molded article by a first mold, in the manufacturing of the contact lens as the second practical embodiment illustrated in FIG. 5.
[FIG. 8] is an explanatory diagram illustrating a state where an embedded component as a heterogeneous element is positioned with respect to the primary molded article illustrated in FIG. 7.
[FIG. 9] is a process explanatory diagram which illustrates a manufacturing process of a contact lens as an ophthalmic device according to a third practical embodiment of the present invention.
[FIG. 10] is a process explanatory diagram following that of FIG. 9.
[FIG. 11] is a process explanatory diagram which illustrates a manufacturing process of a contact lens as an ophthalmic device according to a fourth practical embodiment of the present invention.
[FIG. 12] is a process explanatory diagram following that of FIG. 11.
[FIG. 13] is a cross-sectional diagram illustrating a contact lens as an ophthalmic device according to a fifth practical embodiment of the present invention.
[FIG. 14] is a process explanatory diagram which illustrates a manufacturing process of a contact lens as an ophthalmic device according to a sixth practical embodiment of the present invention.

### EMBODIMENTS FOR CARRYING OUT THE INVENTION

The following description is based on practical embodiments with reference to the drawings in order to clarify the present invention in more detail.

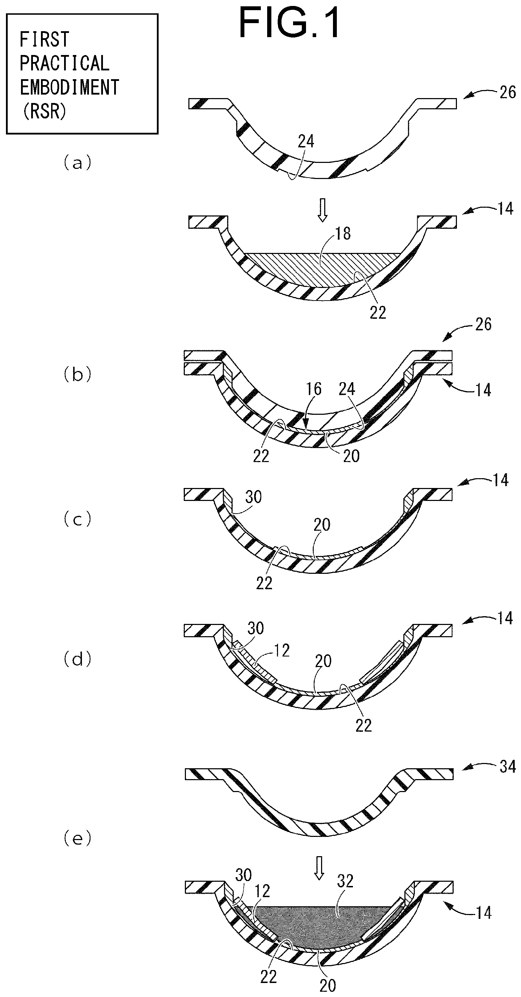

### A. First practical embodiment (FIGS. 1-4)

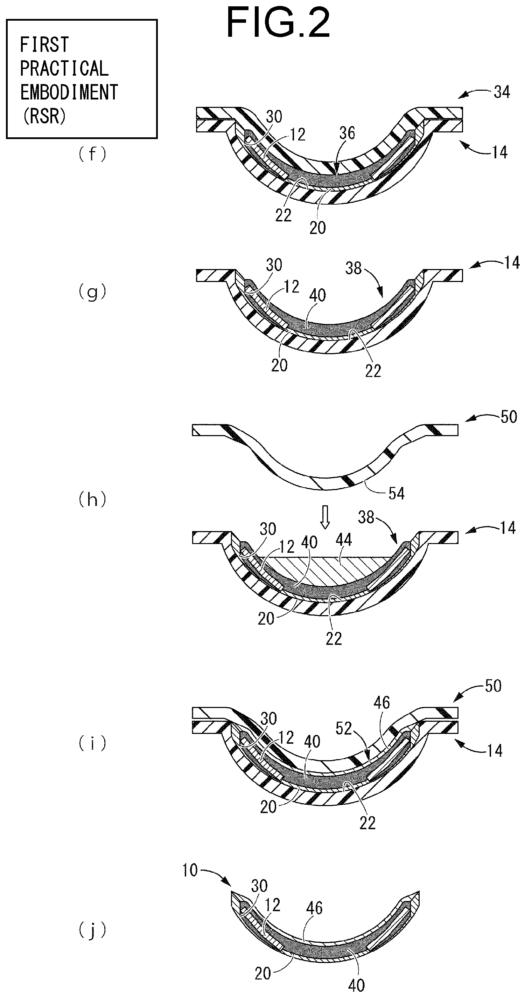

First, FIGS. 1 and 2 show a first practical embodiment illustrating an overview of a method of manufacturing a contact lens 10 as an ophthalmic device according to the present invention. In the present practical embodiment, a lens material undergoes a multi-stage molding process, including a first molding process by molding and polymerizing a first hard lens material, a second molding process by molding and polymerizing a silicone-containing material, and a third molding process by molding and polymerizing the second hard lens material, to manufacture a contact lens 10 in which an embedded component 12 to be embedded is positioned and arranged inside as a heterogeneous element.

More specifically, in the first molding process, as shown in FIGS. 1(a) to 1(c) a primary molded article 20 is formed by molding a first molding material 18 in a first molding cavity 16 defined by a first mold 14.

In the present practical embodiment, a lens front surface mold is adopted having a concave molding surface 22 as a cavity formed surface, which provides a lens front surface composed of substantially spherical crown-shaped convex surfaces, as a first mold 14. Moreover, a support surface mold 26 is adopted as a mold that is matched with the first mold 14 to cooperate with the first mold 14 to define the first molding cavity 16.

The support surface mold 26 has a substantially spherical crown-shaped convex molding surface 24 as a cavity formed surface. The primary molded article 20 molded in the first molding cavity 16 defined by the first mold 14 and the support surface mold 26 form a lens front surface layer having a spherical shell convex shape of the target contact lens 10.

The materials of the first mold 14 and the support surface mold 26 are not limited. Preferably, a resin mold is adopted rather than a metal mold. Specifically, thermoplastic resins may generally be used as mold materials, such as polypropylene, polyethylene, polystyrene, polycarbonate, polyethylene terephthalate, polyamide, polyacetal, and polyvinyl chloride. The materials of both molds may be the same, and it is also possible to use different materials or different surface properties.

Moreover, the molding material (first molding material) 18 of the primary molded article 20 molded in the first molding cavity 16 is selected depending on the target ophthalmic device and is not limited thereto. In the present practical embodiment, any of different contact lens materials can be used depending on the properties required for the target contact lens 10, and known monomers and the like can be used as polymerizable compositions for molding contact lenses.

For illustrative purposes, various conventionally known hard contact lens materials (hard lens materials) can be used, e.g., hard contact lens materials made from polymerizable compositions primarily can also be used, composed of methyl(meth)acrylate (MMA) or the like. However, highly oxygen-permeable hard contact (rigid gas permeable (RGP)) lens materials are preferably used, obtained from polymerizable compositions primarily composed of siloxane-containing monomers, fluorine-containing monomers, styrene-based monomers, or the like.

Furthermore, when molding a primary molded article 20 using such a first molding material 18, for example, as shown in FIG. 1(a), a predetermined amount of the first molding material 18 is injected into the upwardly opened concave molding surface 22 of the first mold 14, and then the convex molding surface 24 of the support surface mold 26 is inserted thereinto and then the mold is closed. Subsequently, the first molding material 18 may be subjected to a curing treatment through polymerization by a known method such as heating, irradiating with light such as ultraviolet light, or a combination thereof.

In this manner, the primary molded article 20 molded using the first mold 14 and the support surface mold 26 has the embedded component 12 supported in a positioned state with respect to the spherical crown concave surface (upper surface in FIG. 1(d)), as shown in FIG. 1(d). For this reason, in the present practical embodiment, the positioning surface for positioning and supporting the embedded component 12 is formed by the spherical crown concave surface of the primary molded article 20. It is preferable to assemble the embedded component 12 to the primary molded article 20 in a state in which the support surface mold 26 is removed by opening the mold, and the primary molded article 20 is supported by the first mold 14, as illustrated.

Moreover, the embedded component 12 is not specifically limited, but any component can be adopted, capable of providing a specific function to the contact lens 10. Specifically, electronic components such as sensors, cameras, projectors, batteries, antennas, and computing devices, capable of realizing a smart contact lens can be used as the embedded component 12. The material of such an embedded component 12 is not limited, and at least a part thereof may include metal, resin, ceramics, or the like. The embedded component 12 is not limited in terms of function, and may exhibit, for example, the following functions in combination as needed: chemical or electrical functions such as sensors or cameras, mechanical functions such as reinforcement or maintaining a specific shape, biological or medical functions such as administering medicines, and design or aesthetic functions such as coloring or adding patterns. Needless to say, the specific size, shape, number, etc. of the embedded component 12 are not limited.

In addition, if there is a concern that the embedded component 12 may have an adverse optical effect on the ocular optical system, it is preferable to set the position of the embedded component 12 so as to avoid the portion where the optical region is formed. Specifically, it is preferable to set the position of the engaging part 30 so that the embedded component 12 is arranged in a peripheral portion and does not overlap the central portion of the contact lens, which is a transmission path of a ray of light entering into the pupil.

However, depending on the type of the embedded component 12, such as a projector for displaying information visible to the wearing person of the contact lens 10 or an extremely small component, part or all of the embedded component 12 may be positioned in the central portion. In addition, a vision correction function etc. may be provided, as necessary, on the central portion of the contact lens 10 in the same manner as well-known contact lenses.

Moreover, the embedded component 12 supported in a positioned state with respect to the primary molded article 20 need only be so that the embedded component 12 can be held at a predetermined position during molding of the silicone layer, as described later. The specific support structure is not limited, and it is also possible to position and support the embedded component 12 on the primary molded article 20 in an affixed state, including adhesion, welding, printing, etc.

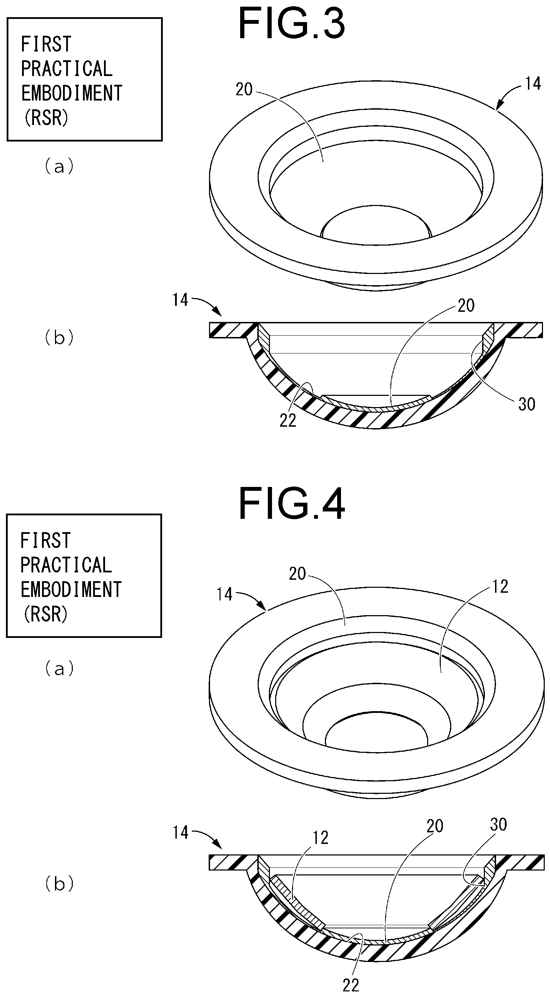

For example, as shown in FIGS. 1(a) and 1(b), a concave-convex engagement formation portion is formed on the convex molding surface 24 of the support surface mold 26, and thereby forming an engaging part 30 for positioning and/or holding the embedded component 12 with respect to the concave surface of the primary molded article 20, as shown in an enlarged view in FIG. 3. In the present practical embodiment, the engaging part 30 functions as a fitting recessed portion so that the embedded component 12 is fitted into the engaging part 30 to be positioned and held, as shown in an enlarged view in FIG. 4.

The concave engaging part 30 to which the embedded component 12 is positioned by fitting or locking as in the present practical embodiment can be formed appropriately depending on the shape, size, etc. of the embedded component 12 and is not limited thereto. In the present practical embodiment, the embedded component 12 and the engaging part 30 are formed in a ring-shaped form extending in the circumferential direction, but it is also possible to use a configuration, for example, an independent concave engaging part 30 formed partially on the circumference and the embedded component 12 to be fitted and held therein.

Then, as shown in FIG. 1(e), in a state where the embedded component 12 is positioned and arranged at a predetermined position of the primary molded article 20, a second molding process is performed by molding and polymerizing a silicone-containing material 32. In this second molding process, an intermediate mold 34 is matched with the first mold 12 in place of the support surface mold 26 removed from the first mold 14, leaving behind the primary molded article 20, thereby defining a silicone molding cavity 36. Then, as shown in FIG. 2(f), an intermediate molded article 38 in which the embedded component 12 is embedded therein is formed by molding the silicone-containing material 32 in the silicone molding cavity 36 in which the primary molded article 20 is left.

In this second molding process, the embedded component 12 can be set at a predetermined position in the silicone molding cavity 36 by supporting the embedded component 12 to the primary molded article 20. Then, by filling the silicone molding cavity 36 with the silicone-containing material 32 and molding a silicone layer 40, which is an intermediate layer, an intermediate molded article 38 can be formed as a molded article in which the embedded component 12 is inserted thereinto.

In this intermediate molded article 38, the embedded component 12 may be inserted into the silicone layer 40 so as to be completely embedded inside, or the intermediate molded article 38 may be partially exposed or protruding from the silicone layer 30 while being covered with the primary molded article 20, which is a lens front surface layer of the contact lens 10, or the cover layer, which is the lens rear surface layer, described below. That is, it is desirable that the embedded component 12 is embedded so as to avoid direct exposure to the front side or rear side surface of the contact lens 10.

In addition, in the present practical embodiment, as can be seen from FIG. 4(b), a gap-shaped region is formed between the embedded component 12 and the primary molded article 20 on the side of the surface where the embedded component 12 is overlapped to the primary molded article 20, and the silicone molding cavity 36 is formed. Then, the silicone-containing material 32 is spread also in the gap-like region, so that the surface of the embedded component 12 is covered, preferably almost entirely, with the silicone layer 40 in a substantially embedded state.

Moreover, in the present practical embodiment, the central portion that is positioned on the radially inner side of the engaging part 30 in the first mold 14 and forms the optical region of the contact lens 10 is formed in a spherical shell shape that extends with a substantially constant thickness dimension throughout. As a result, no size difference or no thickness change is formed in the optical region, making it possible to improve and uniform the optical characteristics.

In this regard, any of various conventionally known silicone-containing lens materials can be adopted as the molding material for the silicone layer 40 in which the embedded component 12 is embedded. For example, silicone-containing hydrogel or non-hydrogel soft contact lens materials are preferably adopted, obtained from polymerizable compositions composed of silicone-containing monomers or silicone-containing macromers.

Such a silicone-containing material 32 can suppress the degree of volumetric shrinkage that occurs accompanying polymerization to a small extent compared to general hard lens materials, particularly compared to the above-mentioned RGP constituting the primary molded article 20. That is, according to the results of the inventor's examination, the contact lens 10 in which the embedded component 12 is embedded is prone to forming defects such as voids, which have adverse effects on the visibility and strength of the contact lens 10, and furthermore, there is a special inherent problem that the formation of water droplets in the voids has an adverse effect on the embedded component 12. With regard to such a problem, the silicone-containing material 32 is adopted as the lens material for embedding and arranging the embedded component 12, making it possible to reduce the negative pressure generated around the embedded component 12, thereby suppressing the occurrence of defects such as voids. As a result, it becomes possible to stably manufacture the contact lens 10 in which the embedded component 12 is embedded and arranged with excellent quality.

In addition, when polymerizing and molding the silicone-containing material 32, the embedded component 12 is positioned and supported by the primary molded article 20, which is composed of RGP or the like. By forming this primary molded article 20 harder than the silicone layer 40, it becomes possible to robustly and stably position the embedded component 12 with sufficient accuracy.

Moreover, since the silicone layer 40 can achieve high oxygen permeability, it is possible to set high oxygen permeability for the entire contact lens 10, including the primary molded article 20 that constitutes the lens front layer and lens rear layer, and the cover layer described below. That is, by constructing the inside of the lens with the silicone layer 40 having high oxygen permeability (Dk value), coupled with the fact that it becomes possible to reduce the thickness of the primary molded article 20 and the cover layer, it is possible to realize high oxygen permeability for the contact lens 10. Moreover, by constructing the primary molded article 20 and the cover layer from RGP, it is possible to further improve the oxygen permeability of the contact lens 10.

Subsequently, the intermediate mold 34 is removed by opening the mold as shown in FIG. 2(g), and then a cover layer 46 constituting the rear surface of the contact lens 10 is formed as shown in FIG. 2(i) by performing a third molding process by molding and polymerizing a second molding material 44 as shown in FIG. 2(h).

In this third molding process, a second mold 50 is matched with the first mold 12 in place of the intermediate mold 34 removed from the first mold 14, leaving behind the intermediate molded article 30, thereby defining a second molding cavity 52. Then, in the second molding cavity 52 in which the intermediate molded article 30 is left, the second molding material 44 is molded to form the cover layer 46 covering the entire back surface side of the silicone layer 40.

The second mold 50 which defines the second molding cavity 52 has a substantially spherical crown-shaped convex molding surface 54 as a cavity formed surface. The cover layer 46 molded in the second molding cavity 52 defined between the matched surfaces of the first mold 12 and the second mold 50 and into which the intermediate molded article 38 is arranged in an insert state constitutes the spherical concave lens rear surface layer in the target contact lens 10.

The intermediate mold 34 and the second mold 50 mentioned above can be composed of the same materials as those of the first mold 14, and the materials thereof are not limited, and the specific shapes and structure of each part including the cavity formed surface are not limited.

Moreover, the molding material (second molding material) 44 of the cover layer 46 molded in the second molding cavity 52 is selected depending on the target ophthalmic device and is not limited thereto. In the present practical embodiment, any of different contact lens materials can be used depending on the characteristics required of the target contact lens 10, and for example, RGP or the like can be preferably adopted, as in the first molding material 18 described above.

When forming the cover layer 46 using the second molding material 44, as shown in FIGS. 1(h) to 1(i), for example, a predetermined amount of the first molding material 18 is injected from above into the intermediate molded article 38 that is arranged in an insert state on the concave molding surface 22 that opens upward in the first mold 14, and then the convex molding surface 54 of the second mold 50 is inserted and then the mold is closed. Subsequently, similar to the molding of the primary molded article 20 using the first molding material 18 described above, the second molding material 44 can be subjected to a curing treatment by polymerization using known methods such as heating, irradiating with ultraviolet light or the like, or a combination thereof.

In this manner, by integrally forming the cover layer 46 in an adhered state to the intermediate molded article 38, the target contact lens 10 is formed and demolded as shown in FIG. 2(j).

The contact lens 10 obtained in this manner has a structure in which the embedded component 12 is embedded and arranged, but molding defects such as voids that occur during molding are reduced or prevented, resulting in a contact lens of favorable quality.

Moreover, the silicone layer 40 in which the embedded component 12 is embedded and arranged is sandwiched from the front and back of the lens by the primary molded article 20 composed of a highly oxygen-permeable hard contact lens material or the like and the cover layer 46, thereby preventing the silicone layer 40 from being exposed to the lens surface. Accordingly, it is possible to avoid problems due to the material properties of the silicone layer 40, such as lipid adsorption and adsorption to the cornea.

In addition, since the embedded component 12 is positioned and set by the primary molded article 20 composed of a hard contact lens material or the like, the embedding position of the embedded component 12 can be set with high accuracy and stability.

Furthermore, even when some sink marks or the like occur on the molding surface of the silicone layer 40 during polymerization molding, they are covered by the cover layer 46 molded on the molding surface of the silicone layer 40, making it possible to avoid practical problems such as sink marks. In other words, by allowing such sink marks on the molding surface of the silicone layer 40, it is possible to more effectively prevent voids from forming inside the silicone layer 40.

Considering this viewpoint, it is also preferable to subject the molding surface of an intermediate mold 34 constituting the molding surface of the silicone layer 40, to surface treatment such as laser irradiation or application of a mold-release agent, as necessary, to improve releasability from the silicone layer 40. The cavity forming surfaces of each mold adopted in the present practical embodiment may be subjected to various treatments as required. For example, by applying a surface property adjustment treatment such as plasma treatment, UV irradiation, corona discharge, laser irradiation, or application of a surfactant, the adhesion to the molding materials 18, 26 can be increased or decreased. Moreover, when molding various molding materials using various molds such as the first mold 14, the support surface mold 26, the intermediate mold 34, and the second mold 50, the temperature of each mold can be controlled by heating or cooling it as needed, thereby adjusting the adhesion to the molding material, etc.

Incidentally, in the present practical embodiment, a lens front surface (spherical crown-shaped convex surface) of the contact lens 10 is formed by the primary molded article 20 which supports the embedded component 12 in a positioned state. In contrast, it is also possible to form the lens rear surface (spherical crown-shaped concave surface) of the contact lens 10 by the primary molded article which supports the embedded component 12 in a positioned state.
Such a practical embodiment will be described below as a second practical embodiment.

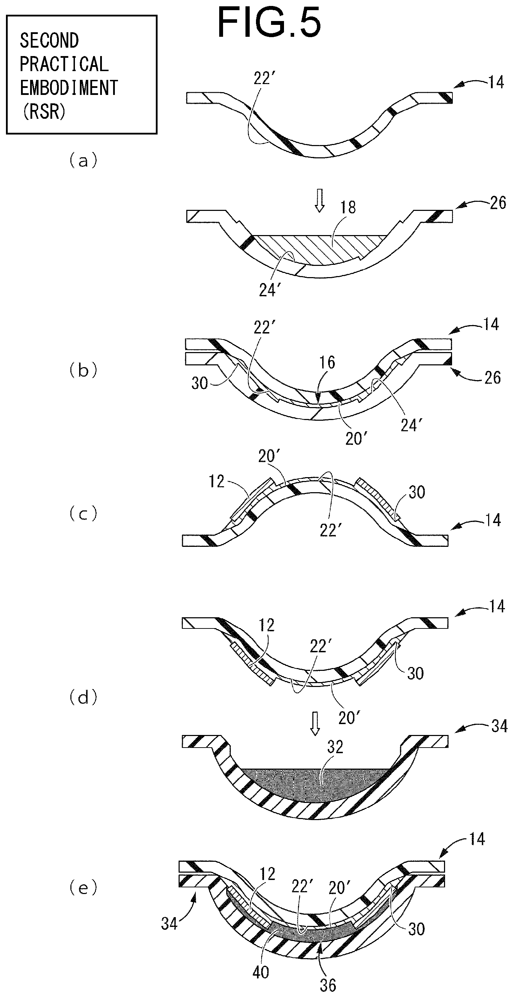

### B. Second practical embodiment (FIGS. 5-8)

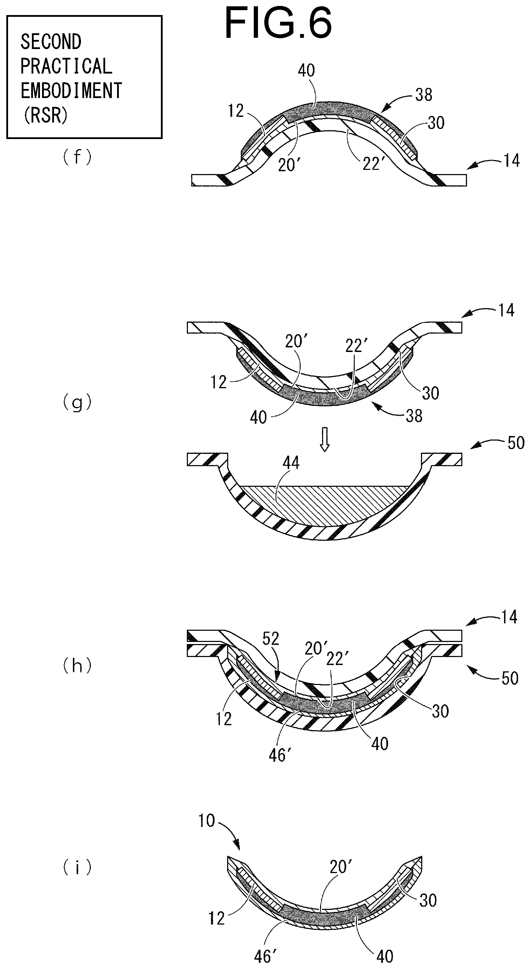

FIGS. 5 and 6 show an overview of a method of manufacturing the contact lens 10 according to a second practical embodiment. In the present practical embodiment, as in the first practical embodiment, by a multi-stage molding process, including a first molding process by molding and polymerizing a first hard lens material, a second molding process by molding and polymerizing a silicone-containing material, and a third molding process by molding and polymerizing the second hard lens material, the contact lens 10 in which the embedded component 12 is positioned and arranged inside as a heterogeneous element is manufactured. In the present practical embodiment, the components and the like corresponding to those in the first practical embodiment are designated by the same reference numerals and names, and detailed description thereof will be omitted.

First, in the first molding process, as shown in FIGS. 5(a) to 5(c), the first molding material 18 composed of RGP or the like is molded in the first molding cavity 16 defined by the first mold 14 and the support surface mold 26 to form the primary molded article 20' in which the embedded component 12 is positioned.

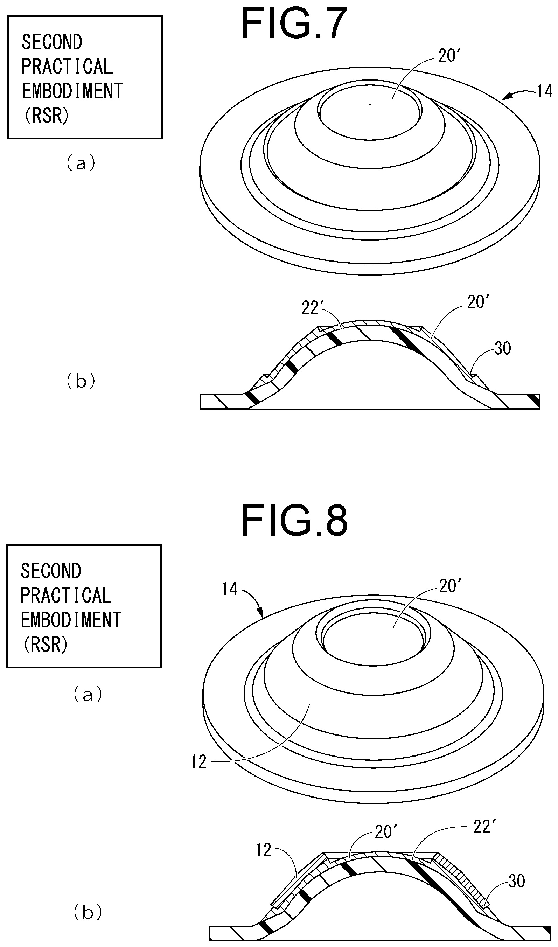

The primary molded article 20' of the present practical embodiment includes a spherical crown-shaped concave surface constituting the lens rear surface of the contact lens 10, unlike the primary molded article 20 constituting the lens front surface in the first practical embodiment. Moreover, as shown also in FIG. 7, the engaging part 30 provided with a stepped surface for locking is formed on the spherical crown-shaped convex surface of the primary molded article 20', and as shown also in FIG. 8, the embedded component 12 is supported in a positioned state with respect to this engaging part 30. That is, in the present practical embodiment, the positioning surface for positioning and supporting the embedded component 12 is formed by the spherical crown convex surface of the primary molded article 20'.

In the subsequent second molding process, as shown in FIGS. 5(d) to 6(f), the silicone-containing material 32 is molded in a silicone molding cavity 36 defined by the first mold 14, with the primary molded article 20' remaining on the molding surface, and the intermediate mold 34, to form a silicone layer 40 that covers the spherical crown-shaped convex surface of the primary molded article 20'.

As a result, the silicone layer 40 is molded while the primary molded article 20', with the embedded component 12 supported in a positioned state, is inserted, and the intermediate molded article 38 is formed. In this intermediate molded article 38, as in the first practical embodiment, one surface of the primary molded article 20' (the surface opposite the first mold 14) is covered over almost the entire surface with the silicone layer 40, and the embedded component 12 is embedded in the silicone layer 40.

In the subsequent third molding process, as shown in FIGS. 6(g) to 6(h), the cover layer 46' covering the spherical crown-shaped convex surface of the silicone layer 40 is formed by molding the second molding material 44 composed of RGP or the like in the second molding cavity 52 defined by the first mold 14 and the second mold 50, with the intermediate molded article 38 remaining on the molding surface.

Consequently, the cover layer 46' is molded with the intermediate molded article 38 inserted, and this cover layer 46 constitutes the lens front surface layer having a spherical shell convex shape of the target contact lens 10.

The contact lens 10 of the present practical embodiment obtained in this manner has substantially the same structure as the contact lens 10 obtained in the first practical embodiment, as shown in FIG. 6(i). That is, the silicone layer 40 is enclosed and sandwiched between the thin, spherical-crown-shaped cover layer 46 constituting the lens front surface and the thin, spherical-crown-shaped primary molded article 20' constituting the lens rear surface, and the embedded component 12 is embedded and arranged in the silicone layer 40 while being accuracy positioned by the primary molded article 20' composed of RGP or the like.

Therefore, the method for manufacturing the contact lens 10 according to the present practical embodiment can also realize all of the same effects as those of the first practical embodiment.

Incidentally, in the above-described first and second practical embodiments, the first molding process of forming the primary molded article 20, 20' that supports the embedded component 12 in a positioned state, is followed by the second molding process of forming the silicone layer 40 on the surface of the primary molded article 20, 20', and then the third molding process of forming the cover layer 46, 46' on the surface of the silicone layer 40 is performed. In contrast, the primary molded article 20, 20' and the cover layer 46, 46' constituting the lens front surface and the lens rear surface may be molded separately in the first and second molding processes, and then in the third molding process, the silicone layer 40 may be molded between the opposing surfaces of the primary molded article 20, 20' and the cover layer 46, 46', thereby enabling the embedded component 12, which is positioned and supported by the primary molded article 20, 20' and/or the cover layer 46, 46', to be embedded and arranged in the silicone layer 40. Such a practical embodiment will be described below as third and fourth practical embodiments.

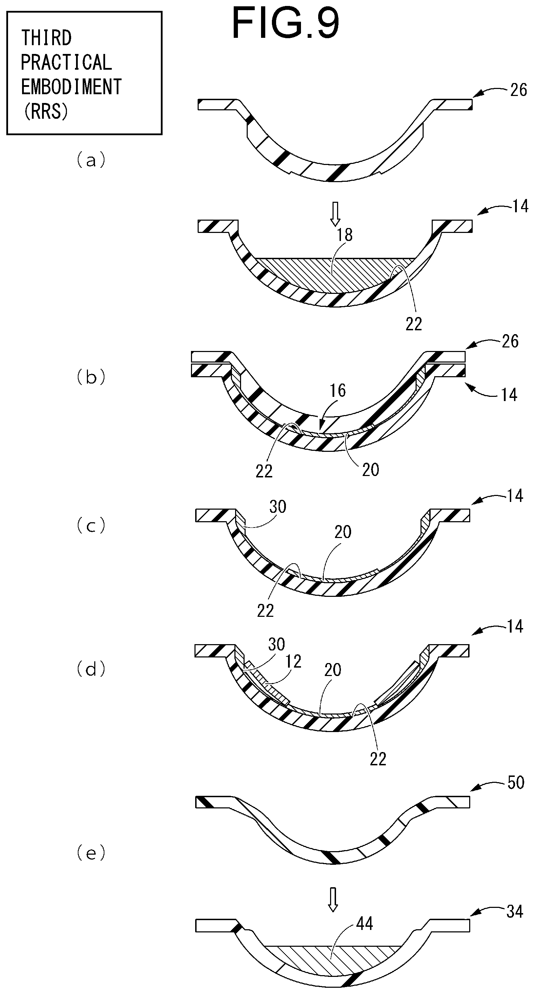

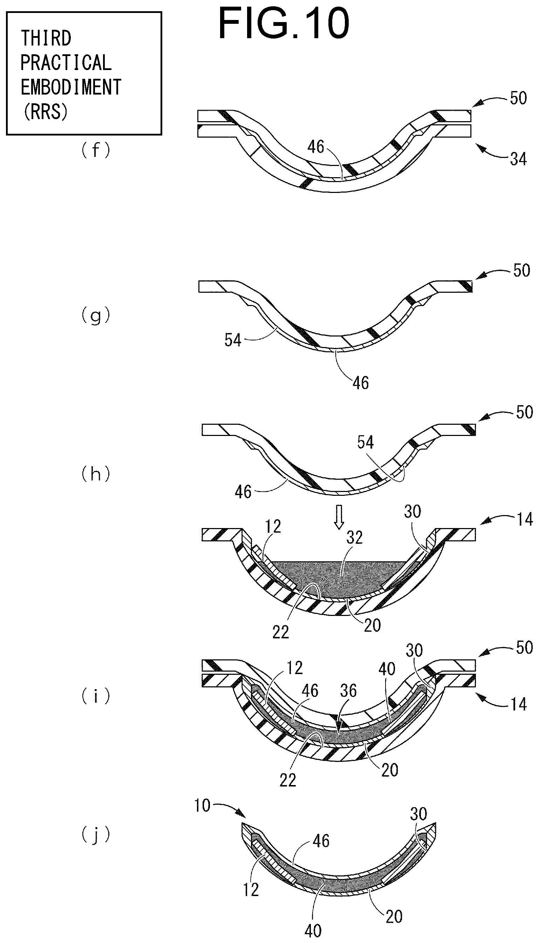

### C. Third practical embodiment (FIGS. 9 and 10)

FIGS. 9 and 10 show an overview of a method of manufacturing the contact lens 10 according to a third practical embodiment. In the present practical embodiment, the components and the like corresponding to those in the first practical embodiment are designated by the same reference numerals and names, and detailed description thereof will be omitted.

First, the first molding process is the same process as the first practical embodiment, as shown in FIGS. 9(a) to 9(d), the first molding material 18 is molded in the first molding cavity 16 defined by the first mold 14 and the support surface mold 26 to form the primary molded article 20 in which the embedded component 12 is positioned. This primary molded article 20 is composed of RGP or the like, as in the first practical embodiment, and constitutes the lens front surface layer having a thin spherical crown shape as a whole.

In the second molding process, as shown in FIGS. 9(e) to 10(g), the second molding material 44 composed of RGP or the like is injected into the intermediate mold 34 having the spherical-crown concave molding surface, and the second mold 50 having the convex molding surface 54 is matched with the intermediate mold 34, and the second molding material 44 is molded to form the cover layer 46. In the same manner as the first practical embodiment, the cover layer 46 is composed of RGP or the like and constitutes the lens rear surface layer having a thin spherical crown shape as a whole.

In this regard, the formation of the primary molded article 20 in the first molding process and the formation of the cover layer 46 in the second molding process may be performed in any order, and may be performed in parallel using independent equipment. Alternatively, the primary molded article 20 and/or the cover layer 46 may be formed in advance and may be stocked. In the present practical embodiment, the cover layer 46 formed of the second molding material 44 is a separate molded article formed separately from the primary molded article 20 that positions and supports the embedded component 12.

Subsequently, in the third molding process, as shown in FIGS. 10(h) to 10(j), the silicone-containing material 32 is molded in the silicone molding cavity 36 in which the primary molded article 20 and the cover layer 46 are arranged in an inserted state, to form a silicone layer 40 between the opposing surfaces of the primary molded article 20 and the cover layer 46.

Specifically, the first mold 14, in which the primary molded article 20 having the embedded component 12 positioned and arranged is remaining on the concave molding surface 22, is opened upward, and the silicone-containing material 32 is injected therein. Then, the second mold 50, with the cover layer 46 remaining on the convex molding surface 54, is matched from above with respect to the first mold 14, thereby defining the silicone molding cavity 36, in which the silicone-containing material 32 is molded and polymerized.

Consequently, the embedded component 12, which is positioned and supported by the primary molded article 20 and arranged between the opposing surfaces of the primary molded article 20 and the cover layer 46, is embedded and arranged in an embedded state, with the entire surface covered by the silicone layer 40.

Even in the method for molding the contact lens 10 according to the present practical embodiment, molding defects such as reduced pressure during polymerization of the silicone-containing material 32 and resulting voids are suppressed, and the silicone layer 40 can be accurately adhered to the primary molded article 20 and the cover layer 46, making it possible to stably manufacture the target contact lens 10 with favorable quality in which the embedded component 12 is embedded and arranged. Moreover, the positioning accuracy of the embedded component 12 can be ensured satisfactorily and stably by the primary molded article 20 composed of RGP or the like, and the same effects as those of the first practical embodiment can be achieved.

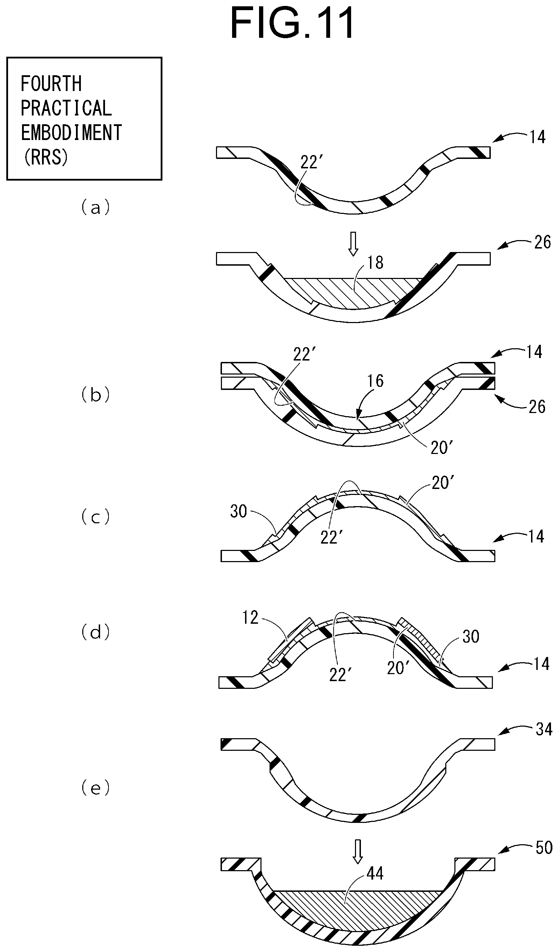

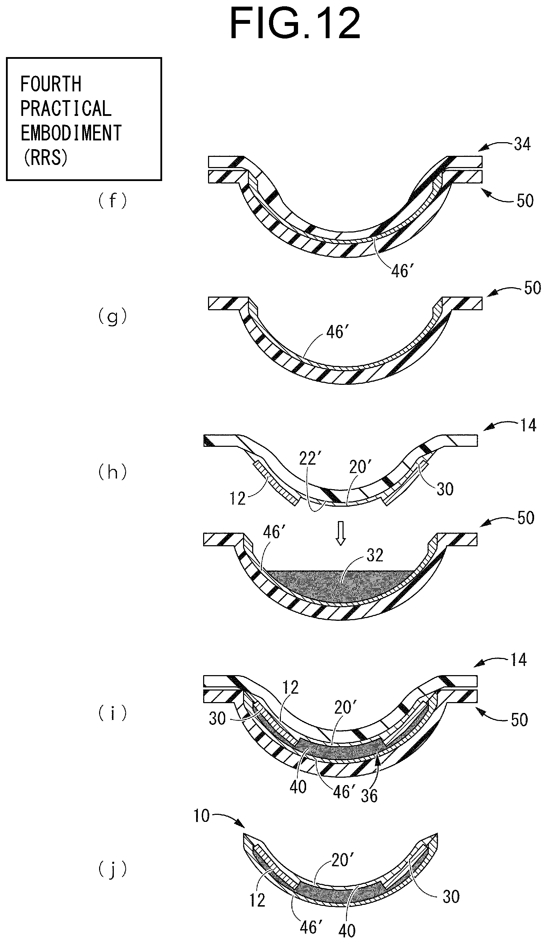

### D. Fourth practical embodiment (FIGS. 11 and 12)

FIGS. 11 and 12 show an overview of a method of manufacturing the contact lens 10 according to a fourth practical embodiment. In the present practical embodiment, the components and the like corresponding to those in the second practical embodiment are designated by the same reference numerals and names, and detailed description thereof will be omitted.

First, the first molding process is the same process as the second practical embodiment, as shown in FIGS. 11(a) to 11(d), the first molding material 18 is molded in the first molding cavity 16 defined by the first mold 14 and the support surface mold 26 to form the primary molded article 20' in which the embedded component 12 is positioned. This primary molded article 20' is composed of RGP or the like, as in the second practical embodiment, and constitutes the lens rear surface layer having a thin spherical crown shape as a whole.

In the second molding process, as shown in FIGS. 11(e) to 12(g), the second molding material 44 composed of RGP or the like is injected into the second mold 50 having the spherical-crown concave molding surface, and the intermediate mold 34 having the convex molding surface is matched with the intermediate mold 34, and the second molding material 44 is molded to form the cover layer 46'. In the same manner as the second practical embodiment, the cover layer 46' as the separate molded article is composed of RGP or the like and constitutes the lens front surface layer having a thin spherical crown shape as a whole.

In this regard, the formation of the primary molded article 20' in the first molding process and the formation of the cover layer 46' in the second molding process may be performed in any order, and may be performed in parallel using independent equipment. Alternatively, the primary molded article 20' and/or the cover layer 46' may be formed in advance and may be stocked.

Subsequently, in the third molding process, as shown in FIGS. 12(h) to 12(j), the silicone-containing material 32 is molded in the silicone molding cavity 36 in which the primary molded article 20' and the cover layer 46' are arranged in an inserted state, to form a silicone layer 40 between the opposing surfaces of the primary molded article 20' and the cover layer 46'.

Specifically, the second mold 50, with the cover layer 46' remaining on the concave molding surface, is opened upward, and the silicone-containing material 32 is injected therein. Then, the first mold 14, with the primary molded article 20' remaining on the convex molding surface 22', is matched from above with respect to the second mold 50, thereby defining the silicone molding cavity 36, in which the silicone-containing material 32 is molded and polymerized.

Consequently, the embedded component 12, which is positioned and supported by the primary molded article 20' and arranged between the opposing surfaces of the primary molded article 20' and the cover layer 46', is embedded and arranged in an embedded state, with the entire surface covered by the silicone layer 40.

Even in the method for molding the contact lens 10 according to the present practical embodiment, molding defects such as reduced pressure during polymerization of the silicone-containing material 32 and resulting voids are suppressed, and the silicone layer 40 can be accurately adhered to the primary molded article 20' and the cover layer 46', making it possible to stably manufacture the target contact lens 10 with favorable quality in which the embedded component 12 is embedded and arranged. Moreover, the positioning accuracy of the embedded component 12 can be ensured satisfactorily and stably by the primary molded article 20' composed of RGP or the like, and the same effects as those of each practical embodiment can be achieved.

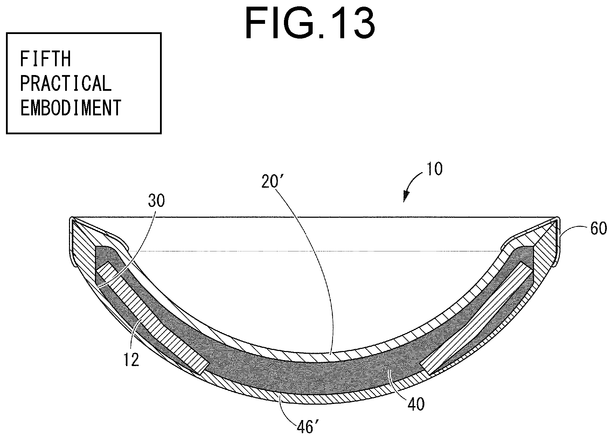

### E. Fifth practical embodiment (FIG. 13)

In the contact lens 10 of each of the above-described practical embodiments, the silicone layer 40 covering the embedded component 12 is covered on both the lens front surface and lens rear surface sides with the lens front surface layer and the lens rear surface layer (20, 20', 46, 46') composed of RGP or the like, thereby preventing the silicone layer 40 from being exposed to the lens surface. Thus, exposing the silicone layer 40 to the lens surface is preferable in consideration of the properties of the silicone layer 40, such as lipid adsorption. Moreover, if the silicone layer 40 is softer than the lens front surface and lens rear surface layers (20, 20', 46, 46') composed of RGP or the like, it is preferable to completely encapsulate the silicone layer 40 so as not to be exposed to the surface, from the standpoint of shape stability and therefore optical stability of the contact lens 10.

Considering the contact lens 10 of each of the above-described practical embodiments from this perspective, the lens front surface and the lens rear surface are respectively composed of the primary molded article 20, 20' and the cover layer 46, 46', each of which is a single-structure molded body. However, at the lens edge portion, there is a boundary surface on the outer peripheral side of the silicone layer 40 with an overlapping structure between the primary molded article 20, 20' and the cover layer 46, 46'. Accordingly, it is also conceivable that there is a risk of contact with the silicone layer 40 from the outside at such a boundary surface.

In particular, in the second and fourth practical embodiments, the silicone layer 40 is formed by molding and polymerizing the silicone-containing material 32 between the opposing overlapping surfaces of the primary molded article 20, 20' and the cover layer 46, 46'. Accordingly, in consideration of molding conditions including molding dimensional errors due to polymerization shrinkage and the like and mold clamping force, it is preferable to anticipate the risk that the silicone layer 40 may be formed extending to the outer peripheral end of the edge portion through gaps between the overlapping surfaces in the peripheral portions of the primary molded article 20, 20' and the cover layer 46, 46'.

Therefore, in the contact lens 10 of the present practical embodiment, as shown in FIG. 13, an edge coating layer 60 is provided for covering the entire edge of the contact lens 10, thereby coating the entire overlapping surface at the peripheral portions of the primary molded article 20, 20' and the cover layer 46, 46'.

By providing such an edge coating layer 60, it is possible to prevent external influences on the silicone layer 40 through the boundary surface between the primary molded article 20, 20' and the cover layer 46, 46', and also possible to more reliably prevent risks due to external exposure of the silicone layer 40, thereby improving and stabilizing quality.

In addition, the material of the edge coating layer 60 is not particularly limited, and various materials other than the silicone-containing materials may be used, and preferably the lens materials similar to those of the primary molded article 20, 20' and the cover layer 46, 46' may be used. However, since the edge coating layer 60 does not affect the optical characteristics as long as it does not extend to the optical region, there is no need to consider the optical characteristics of the lens. However, since there is a possibility that such an edge coating layer 60 may be formed on the surface of contact lens 10 over a region extending into the optical region, it may be formed as an integrated structure capable of coating the entire surface of the contact lens 10 in a wrap-like manner.

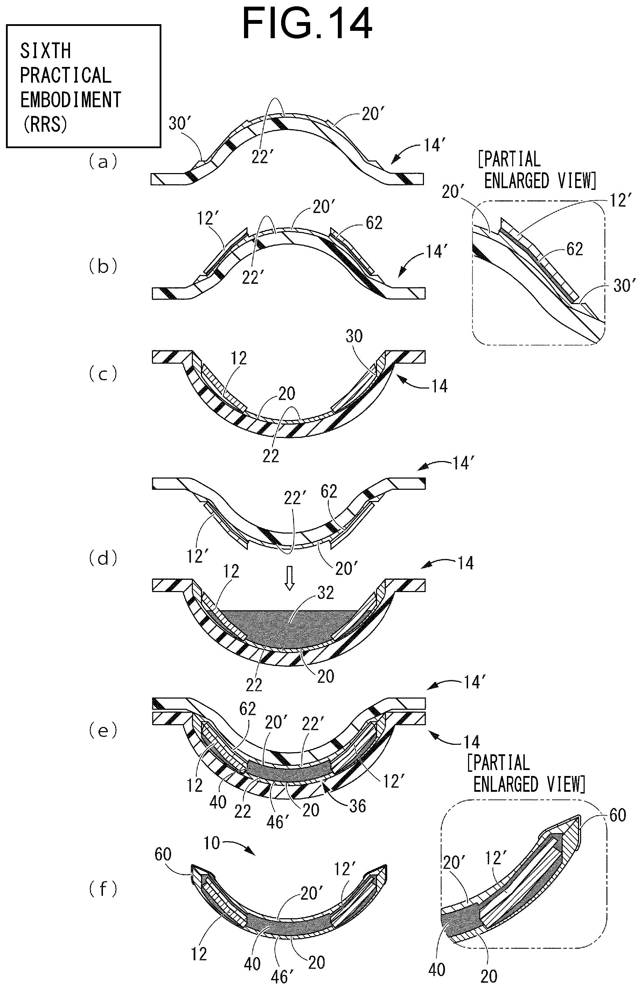

### F. Sixth practical embodiment (FIG. 14)

In the contact lens 10 of each of the above-described practical embodiments, the embedded component 12 is arranged in an embedded state within the silicone layer 40 so as to be assembled and supported in a positioned state with respect to the primary molded article 20, 20' constituting any one of the lens front surface layer and the lens rear surface layer. As mentioned above, there are no limitations on the specific type, shape, size, structure, or number of such embedded component 12, but by adopting the primary molded article 20 constituting the lens front surface layer and a primary molded article 20' constituting the lens rear surface layer together as primary molded articles that support the components 12 in a positioned state, it is possible to arrange the components 12 in an embedded state within the silicone layer 40 from both the lens front surface and rear surface sides.

One specific practical embodiment thereof is illustrated in FIG. 14 as a sixth practical embodiment. In the present practical embodiment, the components and the like corresponding to those in the third and fourth practical embodiments are designated by the same reference numerals and names, and detailed description thereof will be omitted.

First, the first molding process is the same as the first molding process in the fourth practical embodiment, and as shown in FIGS. 14(a) to 14(b), the primary molded article 20' in which the embedded component 12' is positioned is formed by molding using a first mold 14' and a support surface mold (not shown). This primary molded article 20' is made of RGP or the like, as in the fourth practical embodiment, and constitutes the lens rear surface layer having a thin spherical crown shape as a whole.

Then, similarly to the fourth practical embodiment, the embedded component 12' is supported in a positioned state with respect to the engaging part 30' of the primary molded article 20'. The embedded component 12' can also be supported in a positioned state with respect to the primary molded article 20' by fitting or locking the embedded component 12' into the engaging part 30', as in the fourth practical embodiment. However, in the present practical embodiment, in addition to positioning by the fitting structure, the embedded component 12' is overlapped and adhered to the primary molded article 20' by the adhesive layer 62, thereby positioning and fixing the embedded component 12' by using adhesion. When the adhesive layer 62 is used to position and support the embedded component 12', it is not necessary to adopt a geometrical engaging structure with respect to the embedded component 12', such as an uneven or hook-shaped structure, in the primary molded article 20', and it is also possible to form the primary molded article 20' with a smooth surface shape.

Moreover, the specific composition of the adhesive 62 is not limited and can be selected from various conventionally known adhesives in consideration of the required characteristics and materials of the contact lens 10, but a silicone-containing adhesive is preferably adopted. As the silicone-containing adhesive, it is possible to adopt any room temperature curing adhesives, heat curing adhesives, addition reaction curing adhesives, one-component adhesives, or two-component adhesives, and modified silicone adhesives may also be suitably adopted. Moreover, it is possible to adopt silicone-based sealants or pressure-sensitive adhesives since the positioning support of the embedded component 12' with respect to the primary molded article 20' only needs to be such that the embedded component 12' can be held at a predetermined position within the molding cavity during molding of the silicone layer 40. In the present practical embodiment (the present invention), the silicone-containing adhesive 62 is interpreted so as to include silicone-containing sealants, pressure-sensitive adhesives, and the like.

In parallel to this first molding process, as shown in FIG. 14(c), the second molding process is performed to form the primary molded article 20 in which the embedded component 12 is positioned and arranged by molding using the first mold 14 and the support surface mold (not shown). This primary molded article 20 is made of RGP or the like, as in the third practical embodiment, and constitutes the lens front surface layer having a thin spherical crown shape as a whole.

Then, similarly to the third practical embodiment, the embedded component 12 is supported in a positioned state with respect to the engaging part 30 of the primary molded article 20. It is also possible to use the adhesive structure in order to position and support the embedded component 12 with respect to the primary molded article 20, but in the present practical embodiment, as in the third practical embodiment, the embedded component 12 is positioned and supported with respect to the primary molded article 20 by being fitted into the engaging part 30.

Subsequently, as shown in FIGS. 14(d) to 14(f), the silicone-containing material 32 is molded in a manner substantially similar to the third and fourth practical embodiments to form the contact lens 10 in which the embedded component 12, 12' is embedded and arranged within the silicone layer 40.

Specifically, the first mold 14, in which the primary molded article 20 having the embedded component 12 positioned and arranged is remaining on the concave molding surface, is opened upward, and the silicone-containing material 32 is injected therein. Then, the first mold 14', with the primary molded article 20', in which the embedded component 12' is positioned and arranged, remaining on the convex molding surface, is matched from above with respect to the first mold 14, thereby defining the silicone molding cavity 36, in which the silicone-containing material 32 is molded and polymerized.

Consequently, the silicone-containing material 32 is molded in the silicone molding cavity 36 in which two primary molded articles 20, 20' are arranged in an inserted state, to form a silicone layer 40 between the opposing surfaces of the primary molded article 20 and the primary molded article 20'. Inside the silicone layer 40, the components 12, 12', which are positioned and supported by the primary molded articles 20, 20' and are arranged between the opposing surfaces of the two primary molded articles 20, 20', are respectively (arranged so as to be overlapped each other in the front-to-back direction of the lens, in the present practical embodiment) and embedded and arranged in an embedded state, almost entirely covered by the silicone layer 40.

Even in the method for molding the contact lens 10 according to the present practical embodiment, it is possible to stably manufacture the contact lens 10 of favorable quality, in which the components 12, 12' are embedded and arranged with favorable positioning accuracy, as in the above-mentioned practical embodiments, while avoiding defects such as voids.

In particular, in the present practical embodiment, since the components 12, 12' can be positioned and supported by the primary molded article 20 constituting the lens front surface layer and the primary molded article 20' constituting the lens rear surface layer, and can be arranged in an embedded state within the silicone layer 40, it is possible to ensure an even greater degree of freedom in setting the number, arrangement and positions of the components 12, 12' and arranged within the silicone layer 40.

Moreover, by positioning the embedded component 12' with respect to the primary molded article 20' using an adhesive structure that uses the adhesive 62, it is possible to simplify the surface shape of the primary molded article 20'. Furthermore, by using the silicone-containing adhesive 62, the silicone layer 40 that is subsequently molded and polymerized is integrated with the adhesive 62, making it possible to substantially eliminate the interface between the silicone layer 40 and the adhesive 62.

Although several specific practical embodiments of the present invention have been described above, the present invention should not be restrictively interpreted as being limited by the specific descriptions in these practical embodiments.

For example, the contact lens 10 in which the embedded component 12 is inserted can provide well-known soft contact lenses or hard contact lenses that are worn overlapped on the cornea, but can also provide scleral lenses that are worn with the lens edge positioned on the sclera outside the cornea. In scleral lenses, the size of the region covering the sclera can be set arbitrarily. For example, when covering a wide area of the sclera, the outer peripheral shape of the lens edge may be non-circular. For example, when it is desired to position the embedded component 12 on the eyeball with high precision during wear, a scleral lens or the like is suitable, as its movement on the eyeball can be kept small during wear.

Moreover, the contact lens 10 in which the embedded component 12 is inserted tends to have a large lens thickness, and in such cases, it is desirable to ensure sufficient oxygen permeability in the contact lens, not only when it is worn continuously over several days, but also when it is used daily. In this regard, in the contact lens 10 according to each of the above-described practical embodiments, the silicone layer 40 is adopted composed of a silicone-based material with high oxygen permeability, such as a monomer such as a silicone-containing (meth)acrylate or a silicone-containing macromer, making it easy to ensure high oxygen permeability. In particular, by using RGP for the lens front surface layer and the lens rear surface layer, the positioning accuracy of the embedded component can be ensured, while the oxygen permeability of the contact lens 10 can be further improved.

In particular, in the central portion of the lens that is positioned on the cornea during wear, the thickness dimension of the silicone layer 40 can be made larger than the thickness dimension of the lens front surface layer or lens rear surface layer, thereby providing higher oxygen permeability to the contact lens 10. More preferably, in the central portion off the embedded component, the thickness dimension of both the lens front surface layer and the lens rear surface layer is half or less of the thickness dimension of the silicone layer 40. Alternatively, the total mass of the silicone layer 40 together with the lens front surface layer and the lens rear surface layer is preferably 99% or less, and more preferably 97.5% or less, of the total mass when the silicone layer 40 is replaced by the same hard lens material as the lens front surface layer and the lens rear surface layer.

Considering more specifically, given the typical oxygen permeability of RGP lenses, in order to satisfy the recommended level of oxygen permeability (Dk value) for daily use, for example, it becomes difficult to achieve this level with an RGP single-layer structure when the maximum lens thickness at the central portion exceeds 0.4 mm for an RGP lens material with a Dk value of around 100, and it becomes difficult to achieve this level with an RGP single-layer structure when the maximum lens thickness at the central portion exceeds 0.7 mm for an RGP lens material with a Dk value of around 170. Accordingly, for the contact lens 10 having a maximum lens thickness at the center is greater than 0.4 mm or 0.7 mm depending on the lens materials, it is more meaningful to adopt a laminated structure such as that of each practical embodiment in which the silicone layer 40 is provided. Moreover, in the central portion of the contact lens 10, it is effective to keep the total thickness of the lens front surface layer and the lens rear surface layer composed of RGP to 0.4 mm or less or 0.7 mm or less depending on the lens materials, and it is desirable to actively ensure the lens thickness required for the embedded component 12, from the silicone layer 40.

In the peripheral portion of the contact lens 10, particularly the outer peripheral portion where the lens thickness is thinner, the outer peripheral portion may be located away from the cornea in a scleral lens or other scleral lens, and therefore there is almost no problem with oxygen permeability. Therefore, the lens may have a single structure of RGP material composed of the lens front surface layer and/or the lens rear surface layer without the silicone layer 40 sandwiched therebetween.

Moreover, in the contact lens 10 of the above practical embodiments, the front and rear surfaces of the silicone layer 40 are covered with the lens front surface layer and the lens rear surface layer composed of RGP or the like, which prevents the silicone layer 40 from coming into direct contact with the living body surface (cornea or eyelids) during wear. Accordingly, while the silicone layer 40 provides excellent oxygen permeability, it is possible to avoid a decrease in wearing comfort due to the water repellency of the silicone layer 40 or its adsorption to the surface of the living body, and to realize a favorable lens wearing comfort based on the hydrophilicity of RGP and the like and its lubricity with the living body. However, in cases such as scleral lenses, where the central portion of the lens is raised above the corneal surface when worn and a tear film is formed, thereby avoiding direct contact between the lens rear surface and the corneal surface, it is possible to adopt a practical embodiment in which the silicone layer 40 is exposed to the surface even in the central portion of the lens rear surface without causing any major problems.

Furthermore, in the contact lens 10 of the above practical embodiments, the embedded component 12, which is manufactured separately, is assembled into the first mold 14, 14', but it is sufficient that the embedded component 12 is positioned with respect to the first mold 14, 14'. For example, a part or the whole of such an embedded component 12 may be formed on the surface of the first mold 14 by printing, plating, etc., so that the embedded component 12 is positioned and supported on the first mold 14 at the same time when it is formed. Alternatively, it is possible to arrange the embedded component 12 in the molding cavity of the first mold 14 and possible to fix the surface of the embedded component 12 to the first mold 14 during molding of the first mold 14, or possible to partially insert and fix the embedded component 12 into the first mold 14. Alternatively, it is possible to partially insert and fix a metal plate prepared into the first mold 14 and possible to form the embedded component 12 on the surface of the metal plate by plating or sputtering, or possible to mechanically fix the embedded component 12 separately prepared to the metal plate by caulking, etc.

Moreover, in the contact lens 10 of the above practical embodiments, both the lens front surface and the lens rear surface are molded surfaces, but it is also possible to perform finishing processing by cutting, for example, partially or entirely, on at least any one of the lens front surface and the lens rear surface.

Moreover, although the above practical embodiments illustrate examples of application of the present invention to the contact lenses, the present invention is not limited to such contact lenses, and can be applied to ophthalmic devices such as intraocular lenses, eyeglasses, and goggles.

Although not listed herein, the present invention can be implemented in various forms with various changes, modifications, improvements, etc. made based on the knowledge of those skilled in the art, and it goes without saying that all such embodiments are included within the scope of the present invention as long as they do not deviate from the spirit of the present invention.

### KEYS TO SYMBOLS

- 10: Contact lens
- 12: Embedded component
- 12': Embedded component (sixth practical embodiment)
- 14: First mold
- 14': First mold (sixth practical embodiment)
- 16: First molding cavity
- 18: First molding material
- 20: Primary molded article
- 20': Primary molded article (second, fourth, and sixth practical embodiments)
- 22: Concave molding surface (first mold)
- 22': Convex molding surface (second, fourth, and sixth practical embodiments)
- 24: Convex molding surface (component support surface mold)
- 24': Concave molding surface (second, fourth, and sixth practical embodiments)
- 26: Support surface mold
- 30: Engaging part
- 30': Engaging part (sixth practical embodiment)
- 32: Silicone-containing material
- 34: Intermediate mold
- 36: Silicone molding cavity
- 38: Intermediate molded article
- 40: Silicone layer
- 44: Second molding material
- 46: Cover layer
- 46': Cover layer (second and fourth practical embodiments)
- 50: Second mold
- 52: Second molding cavity
- 54: Convex molding surface (second mold)
- 60: Edge coating layer
- 62: Adhesive

## Claims

1. A method of manufacturing an ophthalmic device including at least one heterogeneous element embedded and arranged in the ophthalmic device, the method comprising:
molding and polymerizing a primary molded article using a first molding material, the primary molded article having a positioning surface for positioning the heterogeneous element; and
obtaining a composite molded article including the heterogeneous element embedded in a silicone layer by forming the silicone layer by molding and polymerizing a silicone-containing material on the positioning surface of the primary molded article on which the heterogeneous element is positioned.

2. The method according to claim 1, further comprising:
molding and polymerizing a separate molded article using a second molding material, the separate molded article being overlapped via the silicone layer on the primary molded article; and
forming the silicone layer by molding and polymerizing the silicone-containing material between opposing surfaces of the primary molded article and the separate molded article, the separate molded article being overlapped to the positioning surface of the primary molded article on which the heterogeneous element is positioned.

3. The method according to claim 1, further comprising:
forming the silicone layer by molding and polymerizing the silicone-containing material on the positioning surface of the primary molded article on which the heterogeneous element is positioned; and then
molding and polymerizing a cover layer for covering the silicone layer using a second molding material.

4. The method according to any one of claims 1-3, wherein
the silicone layer is entirely covered without being exposed to an outside.

5. The method according to any one of claims 1-4, wherein
the positioning surface of the primary molded article has a spherical shell concave shape,
the primary molded article is held in a state of the spherical shell concave shape opening vertically upward, and
the silicone-containing material is injected into the positioning surface.

6. The method according to any one of claims 1-4, wherein
the positioning surface of the primary molded article has a spherical convex shape, and the primary molded article is immersed in the stored silicone-containing material with the positioning surface facing vertically downward such that the silicone-containing material is molded and polymerized on the positioning surface of the primary molded article.

7. The method according to any one of claims 1-6, wherein
a surface layer covering the silicone layer is subjected to finishing processing by cutting.

8. The method according to any one of claims 1-7, wherein
at least a portion of a surface layer covering the silicone layer is a molded surface formed by a mold.

9. The method according to any one of claims 1-8, wherein
affixation is used when the heterogeneous element is positioned with respect to the positioning surface of the primary molded article.

10. The method according to claim 9, wherein
the heterogeneous element is affixed to the positioning surface of the primary molded article by adhesion with a silicone-containing adhesive.

11. The method according to claim 9, wherein
the heterogeneous element is affixed to the positioning surface of the primary molded article by being formed on the positioning surface.

12. The method according to any one of claims 1-11, wherein
an engaging structure is used when positioning the heterogeneous element with respect to the positioning surface of the primary molded article.

13. The method according to any one of claims 1-9, 11, and 12, wherein
the heterogeneous element is positioned without using an adhesive when positioning the heterogeneous element with respect to the positioning surface of the primary molded article.

14. The method according to any one of claims 1-13, wherein
when obtaining the composite molded article, the silicone-containing material is interposed between the positioning surface of the primary molded article and the heterogeneous element, and the heterogeneous element is covered by the silicone layer.

15. The method according to any one of claims 1-14, wherein
a component harder than the primary molded article is used as the heterogeneous element.

16. The method according to claim 15, wherein
the heterogeneous element is an electrical component including a metal part.

17. The method according to any one of claims 1-16,
used for manufacturing a contact lens including a scleral lens.

18. A method of manufacturing an ophthalmic device including at least one heterogeneous element embedded and arranged in the ophthalmic device, the method comprising:
molding and polymerizing a first molding material in a first molding cavity defined by a first mold to obtain a primary molded article, the primary molded article having a positioning surface for positioning the heterogeneous element;
molding and polymerizing a second molding material in a second molding cavity defined by a second mold to obtain a separate molded article; and
obtaining a composite molded article including the heterogeneous element embedded in a silicone layer by forming the silicone layer by molding and polymerizing a silicone-containing material between opposing surfaces of the primary molded article and the separate molded article, the separate molded article being overlapped to the positioning surface of the primary molded article on which the heterogeneous element is positioned.

19. A method of manufacturing an ophthalmic device including at least one heterogeneous element embedded and arranged in the ophthalmic device, the method comprising:
molding and polymerizing a first molding material in a first molding cavity defined by a first mold to obtain a primary molded article, the primary molded article having a positioning surface for positioning the heterogeneous element;
opening the first mold and matching an intermediate mold with a positioning surface side of the primary molded article remaining in the first mold to define an intermediate molding cavity, and forming a silicone layer by molding and polymerizing a silicone-containing material in the intermediate molding cavity to obtain a composite molded article including the heterogeneous element that has been positioned with respect to the positioning surface being embedded in the silicone layer; and
demolding the intermediate mold and matching a second mold with a silicone layer side of the composite molded article remaining in the first mold to define a second molding cavity, and molding and polymerizing a second molding material in the second molding cavity to form a cover layer covering the silicone layer from an opposite side of the primary molded article.

20. The method according to any one of claims 2, 3, 18, and 19, wherein
each of the first molding material and the second molding material comprises a hard lens material.

21. An ophthalmic device including at least one heterogeneous element embedded and arranged in the ophthalmic device comprising:
a front side layer and a rear side layer comprising an oxygen-permeable hard lens material while being provided on opposite sides of a silicone layer in a thickness direction, the silicone layer being arranged at an intermediate portion in the thickness direction; and
the heterogeneous element positioned on at least one of the front side layer and the rear side layer, the heterogeneous element being embedded in the silicone layer.

22. The ophthalmic device according to claim 21, wherein
the silicone layer is entirely covered by the front side layer and the rear side layer.

23. The ophthalmic device according to claim 21 or 22, wherein
the heterogeneous element is in a positioned state by using affixation to the at least one of the front side layer and the rear side layer.

24. The ophthalmic device according to claim 23, wherein
the heterogeneous element is affixed by adhesion with a silicone-containing adhesive to the at least one of the front side layer and the rear side layer.

25. The ophthalmic device according to any one of claims 21-24, wherein
in a central portion off the heterogeneous element, a thickness dimension of each of the front side layer and the rear side layer is set to half or less of a thickness dimension of the silicone layer.

26. The ophthalmic device according to any one of claims 20-24, wherein
a total mass of the silicone layer, the front side layer, and the rear side layer combined is 99% or less of a total mass when the silicone layer is replaced by the same hard lens material as the front layer.
